# FASCICULE DE BREVET EUROPEEN

(11) **EP 0 787 601 B1**
(45) Date de publication et mention de la délivrance du brevet: **03.01.2007**
(21) Numéro de dépôt: 97100844.6
(22) Date de dépôt: 21.01.1997
(51) Int. Cl.: B60C 11/12

(54) **Bande de roulement pour pneumatique**
Lauffläche für Reifen
Tread for tyre

(30) Priorité: 30.01.1996 FR 9601254
(43) Date de publication de la demande: 06.08.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Bossut, Michel, 63118 Cebazat (FR)
(74) Mandataire: Diernaz, Christian

(56) Documents cités:
- EP-A- 0 379 854
- GB-A- 727 207
- US-A- 4 298 046

## Description

La présente invention est relative aux bandes de roulement d'enveloppes de pneumatiques à armature de carcasse surmontée d'une ceinture de renforcement sommet.

Le problème de la réduction de la consommation d'énergie pour un véhicule est un problème important et bien souvent conditionne le développement et la commercialisation de certains pneumatiques. La prise en compte de ce problème implique l'obtention de pneumatiques ayant une résistance au roulement réduite.

On sait que la résistance au roulement d'un pneumatique en roulage est reliée aux pertes énergétiques dans ledit pneumatique lesquelles sont pour une partie dépendantes des caractéristiques d'hystérèse des mélanges de gomme employés et tout particulièrement ceux composant la bande de roulement et pour une autre partie dépendantes des cycles de déformations subies par lesdits mélanges pendant le roulage du pneumatique.

Une possibilité de réduction des pertes énergétiques d'un pneumatique en roulage concerne la réduction des pertes énergétiques résultant des caractéristiques d'hystérèse des mélanges de gomme employés et tout particulièrement des mélanges composant la bande de roulement.

Une autre possibilité de réduction des pertes énergétiques concerne la manière dont la bande de roulement est pourvue de découpures, sous forme d'entailles et/ou d'incisions, pour former un dessin de sculpture.

En effet, si l'on examine la bande de roulement d'un pneumatique gonflé à une pression correspondant à sa pression d'utilisation et supportant une charge donnée, on constate que ladite bande présente une surface, dite surface de roulement, située radialement à l'extérieur du pneumatique, qui , en dehors de la zone de contact avec le sol, peut être caractérisée comme une surface à double rayon de courbure, à la fois dans le sens méridien et dans le sens circonférentiel. Cette surface est caractérisée par le fait que son intersection avec un plan radial, c'est à dire un plan qui contient l'axe de rotation du pneumatique, a un profil qui présente en tout point un rayon de courbure méridien non nul; de même et de manière évidente, les intersections de la surface de roulement avec des plans perpendiculaires à l'axe de rotation du pneumatique correspondent à des cercles dont les rayons de courbure sont quasiment identiques au rayon du pneumatique gonflé non chargé et mesuré dans le plan équatorial. Le plan équatorial est le plan perpendiculaire à l'axe de rotation du pneumatique et passant par le milieu de la largeur axiale de la bande de roulement.

Par entaille, on entend toute découpure réalisée dans la bande de roulement et créant deux parois en vis-à-vis débouchant à la surface de roulement, et ayant une largeur d'au moins 2 mm, c'est à dire que la distance moyenne séparant les parois de l'entaille entre l'ouverture et le fond de l'entaille est en moyenne de deux millimètres; par incision, on entend une découpure de largeur inférieure à 2 mm.

Lors du roulage sur un sol de courbure moyenne constante suivant une direction principale et correspondant à la direction de roulage, la surface de roulement se déforme dans une zone dite de contact de façon à adopter la géométrie du sol et par là les courbures principales du sol; cette mise en contact se traduit donc par des déformations de la bande de roulement. En entrée et en sortie de la zone de contact avec le sol, la bande de roulement et sa surface de roulement passent par deux zones de transition, situées au voisinage de la zone de contact, dans lesquelles ladite bande de roulement subit une forte flexion circonférentielle et est contrainte de prendre de très petits rayons de courbure dans le sens circonférentiel.

En conséquence, le cycle de déformation de flexion circonférentielle subie par la bande de roulement est très important puisqu'il impose à la surface externe de la bande de roulement de passer par des courbures très fortes en entrée et en sortie du contact, ladite surface devant prendre les courbures moyennes du sol entre ces deux zones.

Par courbure moyenne du sol, on entend que le sol, sur lequel le pneumatique roule, a une seule courbure dans le sens du déplacement du pneumatique sur celui-ci et que cette courbure reste voisine d'une valeur fixée; à un sol plan correspond une courbure nulle, tandis qu'à un volant de roulage pour essai d'un pneumatique correspond une courbure dont la valeur peut être positive ou négative selon que le sol est concave ou convexe.

Il a été proposé, par exemple dans le brevet FR 1 080 845, afin de réduire la quantité d'énergie dissipée par la déformation de la bande de roulement en entrée et en sortie du contact, de pourvoir ladite bande de nombreuses incisions et/ou rainures disposées en direction transversale ou quasiment transversale; de cette façon, la forte flexion en entrée et en sortie du contact s'en trouve facilitée par l'ouverture des entailles et ainsi l'énergie nécessaire pour le roulage et par voie de conséquence l'énergie consommée par le pneumatique sont réduites.

Si on considère ce qui se passe pendant le roulage d'un pneumatique comportant une bande de roulement non entaillée, on constate que, dans la zone de contact, la bande de roulement est soumise à la fois à l'action des forces de pression perpendiculaires à la surface de contact avec le sol, ces forces équilibrant la charge portée par le pneumatique, à l'action de forces de cisaillement tangentes à la surface de contact et orientées à la fois longitudinalement et transversalement, et à des efforts internes de compression résultant de la variation de courbure de ladite bande de roulement. Les forces tangentielles sont la conséquence directe du contact entre le sol et la surface de roulement de la bande de roulement du pneumatique et de l'existence d'un frottement entre lesdites surfaces. Sous l'effet des efforts de compression, résultant de la flexion de la bande de roulement, et compte tenu de l'existence des forces tangentes à la surface de roulement, il se produit une déformation de la bande de roulement dans le sens de l'épaisseur équivalente à un épaississement de ladite bande. Cette déformation, dans le sens de l'épaisseur de la bande de roulement est, en partie seulement, limitée par les forces de contact agissant perpendiculairement à la surface de roulement dans la zone de contact et les forces de pression de gonflage s'exerçant à l'intérieur du pneumatique.

Si le document US 4,298,046 décrit une bande de roulement comportant des éléments de relief pourvus avec une pluralité d'incisions se fermant dans la zone de contact du pneumatique avec la chaussée, rien n'est toutefois précisé quant à la valeur du taux d'entaillement circonférentiel moyen permettant de limiter voire annuler cette déformation dans le sens de l'épaisseur.

A l'opposé, dans le cas d'une bande de roulement fortement entaillée par de nombreuses découpures, de façon à réaliser des nervures continues et/ou des blocs de gomme, les éléments de sculpture ainsi formés, sont soumis aux actions des pressions de contact et des pressions de gonflage, et il en résulte une déformation de compression suivant leur épaisseur, ce qui conduit à la dissipation d'une certaine quantité d'énergie à chaque cycle, c'est à dire à chaque passage dans le contact.

Un but de l'invention est d'abaisser la résistance au roulement d'un pneumatique en proposant une sculpture de bande de roulement qui tout en facilitant la flexion de ladite bande en entrée et sortie du contact, permette en même temps de réduire le plus possible les déformations de cette bande dans son épaisseur pour une grande partie de la zone de contact.

Dans ce but, il est proposé une bande de roulement d'un pneumatique comportant une armature de carcasse et renforcé par une ceinture de renforcement, la bande de roulement comportant une surface dite de roulement destinée à venir en contact avec un sol. La bande de roulement comporte dans le sens axial au moins une bande circonférentielle, chaque bande étant définie entre les bords de la bande de roulement ou une découpure et un bord ou entre deux découpures; à chaque bande circonférentielle ainsi définie est affectée un indice (i). Sur la surface de roulement de chaque bande circonférentielle d'indice (i), il est réalisé une pluralité d'incisions d'orientation générale sensiblement transversale et réparties de façon quasiment régulière dans la direction circonférentielle, chaque incision ayant, sur la surface de roulement du pneumatique neuf, une largeur moyenne supérieure à zéro et au plus égale à 2 mm de façon à définir sur chaque bande circonférentielle d'indice (i) un taux d'entaillement circonférentiel moyen Tci, s'exprimant comme le rapport de la surface des incisions transversales présentes sur ladite bande circonférentielle à la surface totale de ladite bande.

Par surface d'une incision, il faut comprendre la valeur de la surface de roulement de la bande (i) équivalente à la surface délimitée par les bords de ladite incision et les bords de ladite bande.

Une répartition est dite quasiment régulière dès lors que le nombre total d'incisions dans la zone de contact est en moyenne constant quelque soit la partie de la bande de roulement passant dans ladite zone.

On définit, sur le pneumatique gonflé à sa pression d'utilisation et sur chaque bande circonférentielle d'indice (i), un rayon moyen de courbure circonférentielle Rci et un rayon moyen de courbure transversale Rti obtenus comme étant les rayons mesurés sur la surface de roulement dans la partie médiane de chaque bande circonférentielle d'indice (i). Chaque bande d'indice (i) a une épaisseur moyenne Ei mesurée entre la surface de roulement de ladite bande et la surface radialement à l'extérieur de la ceinture de renforcement sensiblement dans la partie médiane de ladite bande.

On a constaté qu'en choisissant judicieusement la valeur de Tci en fonction de Ei et de Rci, on peut faire en sorte que toutes les incisions transversales, positionnées dans la zone de contact, se ferment de façon à absorber la déformation de compression de chaque bande d'indice (i) dans ladite zone de contact résultant de la variation de courbure circonférentielle.

La bande de roulement selon l'invention est caractérisée en ce que sur la surface de roulement de chaque bande circonférentielle d'indice (i) le taux d'entaillement circonférentiel Tci est compris entre 0,9 et 2 fois la valeur de l'expression Ei/Rci, représentant la déformation de compression de la bande (i) mesurée au passage dans la zone de contact.

Une incision est dite fermée dès lors que les parois de ladite incision sont en contact sur quasiment toute leur surface.

De manière préférentielle, le taux d'entaillement circonférentiel est choisi de façon à être compris entre 0,9 et 1,1 fois la valeur de l'expression Ei/Rci.

Un avantage d'une bande de roulement réalisée selon l'invention réside dans le fait que l'on combine à la fois l'effet bénéfique résultant de la présence des incisions transversales sur les fortes flexions de la bande de roulement en entrée et en sortie de la zone de contact, et le fait que dans cette zone de contact les parois en vis-à-vis de chaque incision viennent en contact de façon que la bande de roulement ne subisse ni une diminution ni une augmentation de son épaisseur. Le taux d'entaillement de chaque bande circonférentielle d'indice (i) est choisi de façon à ce que la totalité des espaces créés par les incisions compense la variation de longueur circonférentielle de la surface de roulement résultant de la variation de courbure de ladite surface dans la zone de contact.

Chaque bande circonférentielle présente en fait un taux d'entaillement circonférentiel qui est directement lié à la variation de courbure circonférentielle moyenne que subit ladite bande circonférentielle en passant dans la zone de contact.

En règle générale, si le taux d'entaillement circonférentiel Tci est inférieur à 0,9 fois la valeur de l'expression Ei/Rci, cela signifie que la variation de longueur circonférentielle de la surface de roulement sur la bande circonférentielle considérée, résultant du passage dans la zone de contact, est supérieure à ce que peut absorber la seule fermeture des incisions transversales, et il se produit alors une compression dans le sens circonférentiel qui provoque un épaississement de la bande de roulement conduisant à une perte d'énergie par hystérèse.

Quand le taux d'entaillement circonférentiel Tci est supérieur à 2 fois la valeur de l'expression Ei/Rci, les incisions ne se ferment pas complètement dans la zone du contact et en conséquence il n'est pas possible d'empêcher l'écrasement de la bande de roulement sous l'action des forces perpendiculaires à la surface de roulement, ce qui conduit à une diminution de l'épaisseur de ladite bande et donc à une perte d'énergie par hystérèse.

L'intérêt d'une telle répartition d'incisions transversales sera partiellement conservé dans le cas d'une sculpture comportant une ou plusieurs entailles circonférentielles et de largeur très supérieure à la largeur des incisions. Ces entailles circonférentielles délimitent, dans le sens axial, les différentes bandes d'indice (i). L'effet de la présence des incisions selon l'invention, sur la diminution de la résistance au roulement, sera diminué mais l'équilibre des performances du pneumatique pourra ainsi être maintenu en particulier sur sol sec et sol mouillé.

De manière avantageuse, il peut être tenu compte que, du fait de l'usure de la bande de roulement, la flexion de ladite bande dans la zone de contact diminue, en prévoyant, par exemple, une réduction du taux d'entaillement circonférentiel au fur et à mesure de l'usure de ladite bande, par exemple en réalisant des incisions ayant des sections transversales de largeur variable et diminuant progressivement.

Le même résultat peut être atteint en faisant en sorte que le nombre d'incisions diminue avec l'usure de la bande de roulement, par exemple, en réalisant sur le pneumatique neuf des incisions de différentes profondeurs, les incisions dont les profondeurs sont les plus faibles s'effaçant au fur et à mesure de l'usure de la bande de roulement.

Il peut, en outre, être avantageux de combiner cette première disposition de répartition d'incisions transversales avec une seconde répartition d'incisions circonférentielles dans chaque bande circonférentielle formant la bande de roulement; en effet, lors du passage dans la zone de contact la courbure transversale de la surface de roulement s'annule, ce qui se traduit par une déformation résultante de compression de la bande de roulement dans le sens transversal. Il est alors avantageux de réaliser une seconde répartition d'incisions comprenant une pluralité d'incisions d'orientation générale circonférentielle et de largeur moyenne supérieure à zéro et inférieure à 2 mm mesurée au niveau de la surface de roulement du pneumatique gonflé à sa pression d'utilisation. Sur chaque bande circonférentielle d'indice (i), il est défini un taux d'entaillement transversal moyen Tti égal au rapport de la surface des incisions circonférentielles sur ladite bande circonférentielle d'indice (i) à la surface totale de ladite bande.

Il est avantageux que la bande de roulement comportant à la fois des incisions transversales et circonférentielles présente sur chaque bande circonférentielle d'indice (i) un taux d'entaillement transversal moyen Tti compris entre 0,6 et 1,2 fois la valeur de l'expression Ei/Rti, de manière à ce que, lors du passage de la surface de roulement dans le contact avec le sol, quasiment toutes les incisions circonférentielles soient elles aussi fermées.

L'invention est illustrée par des dessins qui montrent des exemples de réalisation qui ne sont en rien limitatifs et sur lesquels :
- la figure 1 représente une coupe méridienne d'un pneumatique à carcasse radiale comportant une bande de roulement pourvue d'une sculpture selon l'invention;
- la figure 2 représente la surface de roulement de la bande de roulement du pneumatique correspondant à la figure 1;
- la figure 3 montre une partie de la surface de roulement d'une bande de roulement d'un pneumatique selon l'invention, ladite bande étant divisée en trois bandes circonférentielles dans la direction axiale;
- la figure 4 montre l'empreinte au sol d'une bande de roulement d'un pneumatique selon l'invention, ladite bande comportant trois rainures circonférentielles délimitant quatre bandes circonférentielles dans la direction axiale;
- la figure 5 représente, vue en coupe transversale, différentes sections d'incisions utilisées en combinaison avec la sculpture selon l'invention.

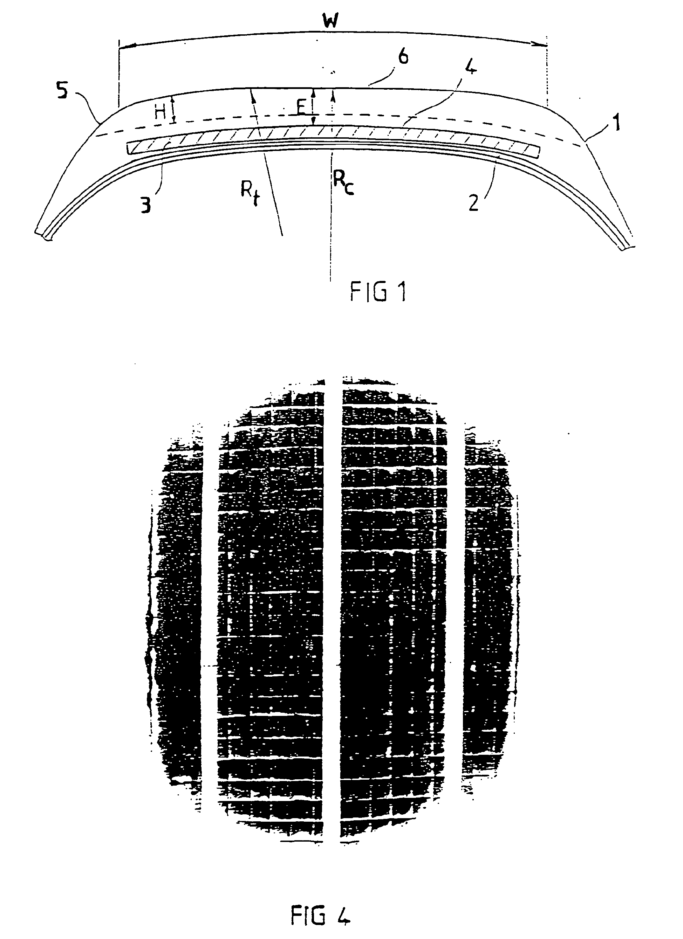

Sur la figure 1 est représentée une partie seulement d'un pneumatique 1 de dimension 125/80 R 18 vu suivant une coupe méridienne, c'est à dire suivant un plan de coupe contenant l'axe de rotation dudit pneumatique. Le
pneumatique 1 comporte une armature de carcasse radiale 2 surmontée radialement à l'extérieur par une ceinture de renforcement de sommet 3. La ceinture de renforcement 3 a une surface 4 située radialement à l'extérieur et sur laquelle est fixée de manière permanente une bande de roulement 5 comportant une surface de roulement 6 située radialement à l'extérieur et destinée à venir en contact avec le sol. La bande de roulement 5 est dans le cas d'espèce composée dans la direction axiale d'une bande circonférentielle unique 61 de même largeur W que la bande de roulement 5, correspondant à la largeur effective de ladite bande venant en contact avec la route sous l'effet de l'écrasement du pneumatique et du roulage de celui-ci.

La bande de roulement 5 a une épaisseur moyenne constante E = 11.5 mm. L'épaisseur E est mesurée, par exemple, au milieu de la largeur de la bande de roulement 5, entre la surface de roulement 6 de ladite bande et la surface radialement à l'extérieur 4 de la ceinture de renforcement sommet 3.

La surface de roulement 6 est convexe, c'est à dire que tous les points d'un segment reliant deux points quelconques de la surface de roulement 6 sont situés radialement à l'intérieur de ladite surface 6. La surface de roulement 6 a un rayon de courbure circonférentiel Rc = 330 mm et un rayon de courbure méridienne Rt = 150 mm tous les deux étant mesurés sur la partie médiane de la bande de roulement du pneumatique gonflé à sa pression nominale.

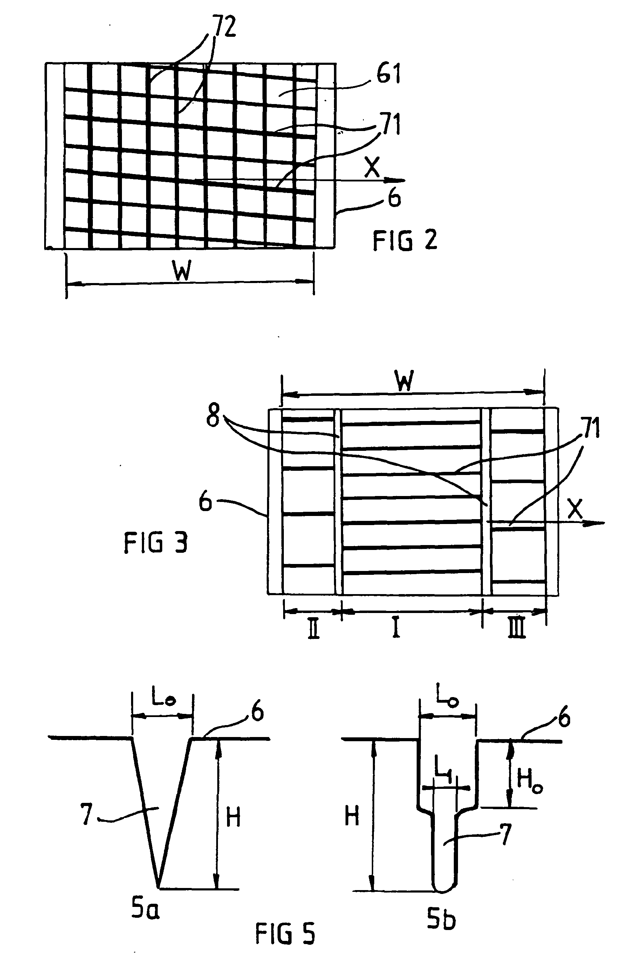

Comme cela est visualisé sur la figure 2, la bande de roulement 5 est pourvue d'une pluralité d'incisions 71 d'orientation sensiblement transversale et d'une pluralité d'incisions 72 d'orientation circonférentielle; les incisions 71 font un angle faible par rapport à la direction axiale X, en l'espèce 5°. Les incisions transversales et circonférentielles ont toutes la même largeur égale à 0,5 mm, ladite largeur restant constante sur quasiment toute la profondeur desdites incisions. Les incisions transversales et circonférentielles sont régulièrement réparties avec un même pas égal à 10 mm, ce qui correspond à un taux d'entaillement transversal d'environ 5% et à un taux d'entaillement circonférentiel d'environ 5%.

Ces valeurs ont été déterminées de façon à ce que la déformation de la bande de roulement 5, lors du roulage du pneumatique 1 sur un sol plan, soit complètement absorbée par la fermeture des incisions se trouvant dans la zone de contact. La mise à plat de la bande de roulement 5 provoque une déformation circonférentielle de contraction de la surface de roulement 6 approximativement égale à E/Rc, soit 3.5% et par une déformation méridienne de contraction de ladite surface 6 approximativement égale à E/Rt, soit 7.6% Ces déformations conduisent à la fermeture de toutes les incisions passant dans la zone de contact.

La demanderesse a par ailleurs constaté que la réalisation d'une à trois entailles d'orientation générale circonférentielle, sur la sculpture des figures 1 et 2 conforme à l'invention, permet d'obtenir un bon comportement du pneumatique sur sol mouillé en sollicitation transversale tout en conservant cependant la majeure partie du gain en résistance au roulement acquis par la présence des incisions définies selon l'invention.

Sur le tableau I présenté ci-après, sont portées les valeurs, mesurées à 90 km/h, des résistances au roulement de plusieurs pneumatiques de dimension 125/80 R 18 gonflés à la pression de 3.5 bars et supportant une charge de 400 daN, chaque pneumatique ne se distinguant des autres que par la sculpture de sa bande de roulement. Dans ce tableau I, la valeur de la résistance au roulement du pneumatique à bande de roulement lisse est prise comme référence en base 100, et une valeur inférieure à 100 doit être comprise comme une valeur inférieure de la résistance au roulement.

Les différentes variantes de découpures figurant dans le tableau 1 sont présentées ci-après :
- Cas A : pneumatique à bande de roulement lisse;
- Cas B : pneumatique dont la bande de roulement comporte une pluralité d'incisions de largeur nulle réparties en direction méridienne et circonférentielle avec un pas de 10 mm;
- Cas C : pneumatique dont la bande de roulement comporte en direction circonférentielle des incisions de largeur 0.5 mm selon un pas de 10 mm et en direction méridienne et en alternance une incision de largeur 0.5 mm suivie d'une incision de largeur nulle avec un pas de 7.5 mm;
- Cas D : pneumatique dont la bande de roulement comporte en direction circonférentielle des incisions de largeur 0.5 mm avec un pas de 10 mm et en direction méridienne et en alternance deux incisions de largeur 0.5 mm suivies d'une incision de largeur nulle avec un pas de 7.5 mm;
- Cas E : pneumatique dont la bande de roulement comporte en direction circonférentielle des incisions de largeur 0.5 mm tous les 10 mm et en direction méridienne des incisions de largeur 0.5 mm tous les 7.5 mm;
- Cas F : pneumatique dont la bande de roulement comporte en direction circonférentielle des incisions de largeur 0.5 mm tous les 7.5 mm et en direction méridienne des incisions de largeur 0.5 mm tous les 7.5 mm.

**Tableau 1**

| | Taux d'entaillement circonférentiel Tci | Taux d'entaillement transversal Tti | Résistance au roulement à 90km/h |
|---|---|---|---|
| Cas A | 0. | 0. | Base 100 |
| Cas B | 0. | 0. | 98.6 |
| Cas C | 3.3 % | 5 % | 95.9 |
| Cas D | 4,4 % | 5 % | 93.2 |
| Cas E | 6,7 % | 5 % | 93.2 |
| Cas F | 7,1 % | 7,1 % | 97.3 |

On constate aisément que la diminution de résistance au roulement est la plus importante pour des valeurs des taux d'entaillement transversal et circonférentiel respectivement compris entre 3.5% et 7% et entre 5% et 7% (Cas C; Cas D; Cas E) alors qu'elle est plus faible dès lors que lesdits taux augmentent (Cas F) ou bien quand la bande de roulement n'est pourvue que d'incisions de largeur nulle (Cas B). La figure 3 représente une variante de l'invention dans laquelle la surface de roulement 6 de largeur W est divisée axialement en trois bandes circonférentielles d'indices (I), (II), (III) de largeurs inégales. La bande circonférentielle d'indice (I) est en position intermédiaire et séparée des deux autres bandes circonférentielles d'indices (II) et (III) par une entaille circonférentielle 8 de largeur 5 mm. Chaque bande circonférentielle est pourvue d'incisions transversales 71 de largeur 0.5 mm disposées de façon régulière dans la direction circonférentielle mais avec un pas deux fois plus faible pour la bande circonférentielle (I) que pour les deux autres bandes (II) et (III).

La figure 4 représente l'empreinte sur un sol plan d'une autre sculpture de bande de roulement d'un pneumatique radial de dimension 175/70 R 13, ladite sculpture étant définie selon l'invention. Cette empreinte correspond aux zones de la bande de roulement qui viennent en contact avec le sol. Dans le cas d'espèce, la sculpture est composée de trois rainures circonférentielles de largeurs 5 mm délimitant, sur la surface de roulement et dans la direction transversale, quatre bandes circonférentielles; les deux bandes circonférentielles situées sur les bords extérieurs de la bande de roulement sont de moindre largeur par rapport aux deux bandes circonférentielles intermédiaires situées dans la région centrale. Sur chaque bande circonférentielle est réalisé un réseau d'incisions de largeur 0.5 mm en direction transversale et circonférentielle, lesdites incisions étant régulièrement espacées dans les deux directions d'un même pas égal à 7 mm.

De façon à optimiser l'effet sur la résistance au roulement de la sculpture selon l'invention, et pour tenir compte du fait que sur chaque bande circonférentielle d'indice (i) l'épaisseur Ei diminue avec l'usure du pneumatique, il est avantageux de prévoir que les taux d'entaillement transversaux et/ou circonférentiels de chaque bande d'indice (i) diminuent proportionnellement à l'épaisseur usée. Pour cela, il est possible de diminuer le nombre d'incisions avec la profondeur et/ou de réaliser des incisions dont les profils vus suivant une coupe sont ceux représentés à titre d'exemples sur les figures 5a et 5b. Sur la figure 5a est représentée une incision 7 dont une coupe a la forme d'un V, la largeur maximale L₀ de ladite incision correspondant à la largeur de l'incision mesurée sur la surface de roulement du pneumatique neuf à l'état gonflé et la profondeur H étant supérieure à la hauteur usée maximale admissible, de façon à ce qu'elle se ferme quasiment en totalité quel que soit l'état d'usure de la bande de roulement 5.

La figure 5b montre une réalisation équivalente obtenue en réalisant une incision 7 ayant, en partant de la surface de roulement 6 et sur une profondeur H₀ une largeur constante L₀ et ensuite jusqu'à la profondeur H une deuxième largeur constante L₁ et telle que L₁ < L₀.

La sculpture selon l'invention peut bien entendu se combiner avec l'utilisation d'une bande de roulement composée d'un matériau de faible perte hystérétique de façon à amplifier l'effet bénéfique sur la résistance au roulement du pneumatique.

De manière préférentielle, cette invention est appliquée au cas d'un pneumatique pour véhicule automobile de tourisme ledit pneumatique comportant au moins une armature de carcasse radiale, c'est à dire composée d'éléments de renfort disposés dans la direction méridienne du pneumatique, surmontée d'une ceinture de renforcement elle même surmontée d'une bande de roulement.

## Revendications

1. Bande de roulement (5) d'un pneumatique (1) comportant une armature de carcasse (2) et renforcé par une ceinture de renforcement (3), la bande de roulement comportant une surface dite de roulement (6) destinée à venir en contact avec un sol, ladite bande de roulement (5) étant composée, axialement,
d'au moins une bande s'étendant dans la direction circonférentielle, chaque bande circonférentielle d'indice (i) étant pourvue, sur sa surface de roulement, d'une pluralité d'incisions (71) d'orientation générale transversale et réparties de façon quasiment régulière dans la direction circonférentielle, chaque incision (71) ayant, sur la surface de roulement (6) du pneumatique (1) neuf, une largeur moyenne (Lₒ) supérieure à zéro et au plus égale à 2 mm de façon à définir sur la surface de roulement de chaque bande circonférentielle d'indice (i) un taux d'entaillement circonférentiel moyen Tci, s'exprimant comme le rapport de la surface des incisions transversales sur la bande d'indice (i) à la surface totale de ladite bande, chaque bande circonférentielle ayant un rayon moyen de courbure circonférentielle Rci obtenu comme étant le rayon mesuré sur la surface de roulement (6) dans la partie médiane de ladite bande circonférentielle,
et chaque bande circonférentielle d'indice (i) a une épaisseur moyenne Ei mesurée entre la surface de roulement et la surface (4) radialement à l'extérieur de la ceinture de renforcement (3), sensiblement dans la partie médiane de ladite bande, la bande de roulement (5) ainsi définie est **caractérisée en ce que** sur chaque bande circonférentielle d'indice (i) :
le taux d'entaillement circonférentiel Tci est compris entre 0,9 et 2 fois la valeur de l'expression Ei/Rci calculée sur ladite bande circonférentielle d'indice (i), de façon à ce que, lorsque la surface de roulement est en contact avec le sol, toutes les incisions transversales (71) soient fermées lorsqu'elles passent dans la zone de contact.

2. Bande de roulement (5) selon la revendication 1 **caractérisée en ce que** le taux d'entaillement circonférentiel Tci est compris entre 0,9 et 1,1 fois la valeur de l'expression Ei/Rci.

3. Bande de roulement (5) selon l'une des revendications 1 ou 2 **caractérisée en ce qu'**elle comporte en plus une pluralité d'incisions (72), d'orientation générale circonférentielle et ayant, sur la surface de roulement (6) du pneumatique (1) neuf, une largeur moyenne non nulle et inférieure à 2 mm, définissant, sur la surface de roulement de chaque bande circonférentielle d'indice (i), un taux d'entaillement transversal Tti, s'exprimant comme le rapport de la surface des incisions circonférentielles sur la bande d'indice (i) à la surface totale de ladite bande, ledit taux d'entaillement Tti étant compris entre 0,6 et 1,2 fois la valeur de Ei/Rti, Rti étant le rayon moyen de courbure transversale mesuré sur la surface de roulement (6) dans la partie médiane de la bande d'indice (i), de façon à ce que, lors du passage de la surface de roulement (6) dans le contact avec le sol, les incisions circonférentielles (72) soient fermées.

4. Bande de roulement (5) selon l'une des revendications 1 à 3 **caractérisée en ce que** la largeur des incisions (7) diminue avec la profondeur H desdites incisions.

5. Bande de roulement (5) selon la revendication 4 **caractérisée en ce que** la largeur des incisions décroît proportionnellement à l'épaisseur usée de ladite bande de roulement.

6. Bande de roulement (5) selon l'une quelconque des revendications 1 à 5 **caractérisée en ce que** le nombre d'incisions débouchant à la surface de roulement diminue avec l'usure de ladite bande de roulement.

7. Pneumatique pour véhicule automobile comportant au moins une armature de carcasse (2) et une ceinture de renforcement (3) surmontée d'une bande de roulement (5) définie selon l'une quelconque des revendications 1 à 6 et **caractérisé en ce que** la ou les armature(s) de carcasse (2) est/sont radiale(s).

## Claims

1. A tread (5) of a tyre (1) comprising a carcass reinforcement (2) and reinforced by a reinforcement belt (3), the tread comprising a so-termed rolling surface (6) which is intended to come into contact with the ground, said tread (5) being composed, axially,
of at least one strip extending in the circumferential direction, each circumferential strip of index (i) being provided, on its rolling surface, with a plurality of incisions (71) of transverse general orientation which are distributed virtually regularly in the circumferential direction, each incision (71) having, on the rolling surface (6) of the new tyre (1), an average width (L₀) greater than zero and at most equal to 2 mm so as to define on the rolling surface of each circumferential strip of index (i) an average circumferential groove ratio Tci, expressed as the ratio of the surface of the transverse incisions on the strip of index (i) to the total surface of said strip, each circumferential strip having an average radius of circumferential curvature Rci obtained as being the radius measured on the rolling surface (6) in the median part of said circumferential strip,
and each circumferential strip of index (i) has an average thickness Ei measured between the rolling surface and the surface (4) radially to the outside of the reinforcement belt (3), substantially in the median part of said strip, the tread (5) thus defined is **characterised in that** on each circumferential strip of index (i):
the circumferential groove ratio Tci is between 0.9 and 2 times the value of the expression Ei/Rci calculated on said circumferential strip of index (i), so that, when the rolling surface is in contact with the ground, all the transverse incisions (71) are closed when they pass into the contact zone.

2. A tread (5) according to Claim 1, **characterised in that** the circumferential groove ratio Tci is between 0.9 and 1.1 times the value of the expression Ei/Rci.

3. A tread (5) according to one of Claims 1 or 2, **characterised in that** it furthermore comprises a plurality of incisions (72), of circumferential general orientation and having, on the rolling surface (6) of the new tyre (1), an average width other than zero and less than 2 mm, defining, on the rolling surface of each circumferential strip of index (i), a transverse groove ratio Tti, expressed as the ratio of the surface of the circumferential incisions on the strip of index (i) to the total surface of said strip, said groove ratio Tti being between 0.6 and 1.2 times the value of Ei/Rti, Rti being the average radius of transverse curvature measured on the rolling surface (6) in the median part of the strip of index (i), so that, when the rolling surface (6) passes into contact with the ground, the circumferential incisions (72) are closed.

4. A tread (5) according to one of Claims 1 to 3, **characterised in that** the width of the incisions (7) decreases with the depth H of said incisions.

5. A tread (5) according to Claim 4, **characterised in that** the width of the incisions decreases proportionally to the worn thickness of said tread.

6. A tread (5) according to any one of Claims 1 to 5, **characterised in that** the number of incisions opening on to the rolling surface decreases as said tread becomes worn.

7. A tyre for an automobile comprising at least one carcass reinforcement (2) and a reinforcement belt (3) surmounted by a tread (5) defined according to any one of Claims 1 to 6 and **characterised in that** the carcass reinforcement(s) (2) is/are radial.

## Patentansprüche

1. Laufstreifen (5) eines Luftreifens (1), der eine Karkassenbewehrung (2) aufweist und mit einem Verstärkungsgürtel (3) verstärkt ist, wobei der Laufstreifen eine so genannte Lauffläche (6) aufweist, die mit einer Fahrbahn in Kontakt kommen soll, wobei der Laufstreifen (5) in axialer Richtung zusammengesetzt ist aus:
mindestens einem Streifen, der sich in Umfangsrichtung erstreckt, wobei jeder umlaufende Streifen mit dem Index (i) an seiner Lauffläche mit einer Vielzahl von Einschnitten (71) von allgemein transversaler Ausrichtung versehen ist, die in Umfangsrichtung praktisch regelmäßig verteilt sind, jeder Einschnitt (71) an der Lauffläche (6) des neuen Luftreifens (1) eine mittlere Breite (L₀) über Null und von höchstens 2 mm aufweist, so dass an der Lauffläche jedes umlaufenden Streifens mit dem Index (i) ein mittlerer Einschnittsgrad Tci in Umfangsrichtung definiert wird, der als das Verhältnis der Fläche der transversalen Einschnitte an dem Streifen mit dem Index (i) und der Gesamtfläche des Streifens ausgedrückt ist, wobei jeder umlaufende Streifen einen mittleren Krümmungsradius in Umfangsrichtung Rci aufweist, der als an der Lauffläche (6) im mittleren Teil des umlaufenden Streifens gemessener Radius erhalten wird,
und jeder umlaufende Streifen mit dem Index (i) eine zwischen der Lauffläche und der radial äußeren Oberfläche (4) des Verstärkungsgürtels (3) in etwa in mittleren Bereich des Streifens gemessene Dicke Ei aufweist, wobei der so definierte Laufstreifen (5) **dadurch gekennzeichnet ist, dass** an jedem umlaufenden Streifen mit dem Index (i):
der Einschnittsgrad Tci in Umfangsrichtung im Bereich des 0,9-bis 2-fachen des Wertes des Ausdrucks Ei/Rci liegt, der an dem umlaufenden Streifen mit dem Index (i) berechnet wird, so dass alle transversalen Einschnitte (71), wenn die Lauffläche mit dem Boden in Kontakt ist, geschlossen sind, wenn sie in die Kontaktzone kommen.

2. Laufstreifen (5) nach Anspruch 1, **dadurch gekennzeichnet, dass** der Einschnittsgrad in Umfangsrichtung Tci 0,9- bis 1,1-mal der Wert des Ausdrucks Ei/Rci ist.

3. Laufstreifen (5) nach einem der Ansprüche 1 oder 2, **dadurch gekennzeichnet, dass** er zusätzlich eine Vielzahl an Einschnitten (72) von allgemein umlaufender Orientierung umfasst, die an der Lauffläche (6) des neuen Reifens (1) eine mittlere Breite ungleich Null und kleiner als 2 mm aufweisen, die an der Lauffläche jedes umlaufenden Streifens mit Index (i) einen transversalen Einschnittsgrad Tti definieren, der als das Verhältnis der Oberfläche der in Umfangsrichtung liegenden Einschnitte an dem Streifen mit Index (i) und der Gesamtoberfläche dieser Fläche ausdrückt wird, wobei dieser Einschnittsgrad Tti 0,6- bis 1,2-mal der Wert von Ei/Rti ist, wobei Rti der transversale mittlere Krümmungsradius ist, der an der Lauffläche (6) im Mittelbereich des Streifens mit dem Index (i) gemessen wird, sodass die in Umfangsrichtung liegenden Einschnitte (72) geschlossen sind, wenn die Lauffläche (6) in Kontakt mit dem Untergrund kommt.

4. Laufstreifen (5) nach einem der Ansprüche 1 bis 3, **dadurch gekennzeichnet, dass** die Breite der Einschnitte (7) mit der Tiefe H dieser Einschnitte abnimmt.

5. Laufstreifen (5) nach Anspruch 4, **dadurch gekennzeichnet, dass** die Breite der Einschnitte proportional zur abgenutzten Dicke des Laufstreifens abnimmt.

6. Laufstreifen (5) nach einem der Ansprüche 1 bis 5, **dadurch gekennzeichnet, dass** die Zahl der Einschnitte, die an der Lauffläche münden, mit der Abnutzung des Laufstreifens abnimmt.

7. Luftreifen für ein Kraftfahrzeug, der mindestens eine Karkassenbewehrung (2) und einen Verstärkungsgürtel (3) aufweist, über dem ein in einem der Ansprüche 1 bis 6 definierter Laufstreifen (5) angeordnet ist, **dadurch gekennzeichnet, dass** die Karkassenbewehrung(en) (2) radial ist/sind.
